# EUROPEAN PATENT SPECIFICATION

(11) **EP 2 660 538 B1**
(45) Date of publication and mention of the grant of the patent: **04.12.2019**
(21) Application number: 11852443.8
(22) Date of filing: 24.10.2011
(51) Int. Cl.: F25B 25/00, F25B 21/00, F25B 9/14

(54) **REFRIGERATING METHOD AND REFRIGERATING DEVICE WITH COMBINATION OF MAGNETIC REFRIGERATION AND REGENERATIVE GAS REFRIGERATION**
KÄLTEVERFAHREN UND -VORRICHTUNG MIT EINER KOMBINATION AUS MAGNETISCHER KÜHLUNG UND REGENERATIVER GASKÜHLUNG
PROCÉDÉ DE RÉFRIGÉRATION ET DISPOSITIF DE RÉFRIGÉRATION COMPRENANT UNE COMBINAISON DE RÉFRIGÉRATION MAGNÉTIQUE ET DE RÉFRIGÉRATION À GAZ RÉGÉNÉRANT

(30) Priority: 29.12.2010 CN 201010622884
(43) Date of publication of application: 06.11.2013
(73) Proprietor: Technical Institute of Physics and Chemistry, Chinese Academy of Sciences, Beijing 100190 (CN)
(72) Inventor: WU, Jianfeng, Beijing 100190 (CN); SHEN, Jun, Beijing 100190 (CN); DAI, Wei, Beijing 100190 (CN); GONG, Maoqiong, Beijing 100190 (CN); SHEN, Baogen, Beijing 100190 (CN)
(74) Representative: Schiweck Weinzierl Koch Patentanwälte Partnerschaft mbB
(86) International application number: PCT/CN2011/001772
(87) International publication number: WO 2012/088747

(56) References cited:
- CN-A- 1 643 310
- JP-A- 9 033 130
- JP-A- H0 933 130
- JP-A- 10 300 251
- JP-A- H10 300 251
- JP-A- 2007 212 128
- US-A- 3 413 814
- US-A1- 2005 028 534
- US-A1- 2007 186 560
- US-B1- 6 415 611
- US-B1- 7 038 565
- DATABASE WPI Week 198509 Thomson Scientific, London, GB; AN 1985-055250 XP002724254, -& SU 1 105 737 A1 (MOSC POWER INST) 30 July 1984 (1984-07-30)

## Description

### BACKGROUND OF THE INVENTION

### 1. Field of the Invention

The present invention relates to an apparatus in the field of refrigeration and cryogenic engineering, and especially to an apparatus combining magnetic refrigeration and gas-based regenerative refrigeration. Namely, the present invention realizes efficient composite refrigeration of magnetic refrigeration and gas-based regenerative refrigeration by replacing part of or all of the conventional regenerator fillers in a gas-based regenerative refrigerator with the magnetic refrigeration materials, disposing the magnetic regenerators formed in such way in a magnetic field with controllable and changeable field strength and performing effective coupling between the working sequence of the gas-based regenerative refrigerator and the magnetic field changing sequence.

### 2. Description of the Related Art

In terms of basic principle, magnetic refrigeration and gas-based regenerative refrigeration are two different refrigeration technologies respectively.

Magnetic refrigeration technology implements refrigeration based on the physical phenomenon that heat is released by the magnetic material to the outside during the magnetization and is absorbed by the magnetic material from the outside during demagnetization. The study on magnetic refrigeration dates back to about 120 years ago. In 1881, Warburg first observed the heating effect of the metal iron in an applied magnetic field. In 1895, P.Langeviz discovered the magnetocaloric effect. Two scientists, Debye (in 1926) and Giaugue (in 1927), concluded that refrigeration can be realized by adiabatic demagnetization. After that, due to the significant progress on the magnetic refrigeration materials (magnetocaloric materials) of paramagnetic salts, the adiabatic demagnetization refrigeration technology developed rapidly in the ultra-low temperature range (∼10⁻⁶K) and low temperature range (below 15 K) after 1933. The discovery of Gd magnetocaloric effect and first realization of room temperature magnetic refrigeration by Brown in 1976 inspired people's interest in the room temperature magnetic refrigeration. Theoretically, magnetic refrigeration could be applied to any temperature range, but due to the limitation of magnetic refrigeration materials magnet technology and engineering technologies, the overall progress on the room temperature magnetic refrigeration is relatively slow. With the proposing of Active Magnetic Regenerator (AMR) and the progresses on room temperature magnetic refrigeration materials and systems by AMES national laboratory and Astronautics Corporation of America in the late 1990s, the magnetic refrigeration technology again attracts extensive attention.

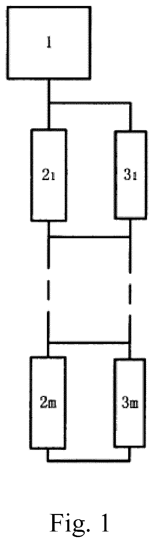

Gas-based regenerative refrigeration is based on compression and expansion of working fluid under oscillating flow conditions, and is mainly used to obtain small or medium scale refrigerating capacity at low temperatures. Ever since Stirling cycle was put forward in 1816, after long-term development, the gas-based regenerative refrigeration have been developed into various forms of refrigerator such as Stirling refrigerator, Vuilleumier (VM) refrigerator, Gifford-McMahon (G-M) refrigerator, Solvay refrigerator, pulse tube (ST) refrigerator and thermoacoustic refrigerator. Although these refrigerators vary in the specific structure, all of them could be viewed as including three major parts: a pressure wave generator, regenerator and phase difference adjusting mechanism for adjusting phase difference between the pressure wave and mass flow rate (as shown Fig.1). A combination of a regenerator and phase difference adjusting mechanism is usually called as a stage of the refrigerator. The main difference among the above refrigerators lies in different forms of pressure wave generators and different forms of phase difference adjusting mechanisms for adjusting phase difference between the pressure wave and mass flow rate. And the common ground of the above refrigerators consists in that they all use regenerators for absorbing heat in the hot-blow period and releasing heat in the reverse cold-blow period. The difference between the regenerator of the gas-based regenerative refrigerator and the above Active Magnetic Regenerator (AMR) of the magnetic refrigerator is that the materials of regenerators in the gas-based regenerative refrigerator only serve as heat transfer mediums without capability of refrigeration

The magnetic refrigeration generally is based on the following three technologies: the magnetic refrigeration materials, magnets and the thermal engineering system. Advances in the magnetic refrigeration materials have been impressive. However, due to limited heat transfer coefficient and relatively small magnetocaloric temperature change (especially with less strong magnets), the temperature difference between heat transfer fluid and materials imposes strong adverse influence on the practical thermodynamic efficiency of the magnetic refrigerator. For this reason, the practical thermodynamic efficiency of the magnetic refrigerator is still very low although the intrinsic thermodynamic efficiency of the magnetic refrigeration is very high. In addition, the magnetic refrigerator often requires a complicated driving mechanism due to requirement of both high intensity changing magnetic field and heat transfer fluid with changing flow direction.

S. Jeong et al. in 1994 (Adv. Cryo. Engi. 39B) reported a magnetic refrigeration experimental system based on Stirling cycle. The concept of combining magnetic refrigeration and Stirling cycle was mentioned in the report. However, it is found after careful analysis of the report that the system is just an AMR magnetic refrigeration system based on Stirling thermodynamic cycle without real combination of magnetic refrigeration and gas-based regenerative refrigeration, let alone mentioning the use of permanent magnets of low energy consumption which can generate periodically-changing high intensity magnetic field conveniently.

G. F. Nellis et al. in 1998 (Adv. Cryo. Engi. 43) reported a magnetic refrigeration experimental system based on G-M cycle. The concept of combining magnetic refrigeration and G-M cycle was mentioned in the report. However, it is found after careful analysis of the report that the system is just an AMR magnetic refrigeration system based on G-M thermodynamic cycle, without real combination of magnetic refrigeration and gas-based regenerative refrigeration, let alone mentioning the use of permanent magnets of low energy consumption which can generate periodically-changing high intensity magnetic field conveniently.

Robert Schauwecker et al. proposed "a hybrid heat pump/refrigerator with magnetic cooling stage" (US 2007/0186560 A1). Although the "hybrid" of "gas refrigerator" and "magnetic refrigeration" is mentioned in the patent, the "gas refrigerator" and "magnetic refrigeration" are independent processes in the cycle and are only continuous in time. Actually, what the patent have achieved is only an "internal cascade" of "gas refrigerator" and "magnetic refrigeration", instead of a real combination of gas-based regenerative refrigeration and magnetic refrigeration. In addition, the patent mentions several methods for changing magnetic field at the locations of magnetocaloric materials. Although the implementation methods are not described in detail, it can be obtained from the analysis of the description that there are many technical difficulties in implementing the methods (either requiring a complicated magnet and driving mechanism, or causing huge energy consumption). Thus, the methods cannot meet practical requirements.

From US patent application US 2005/028534 A1 a cryogenic refrigerator is known having a first and a second refrigerant tube each comprising two tubes that are arranged on a cooling stage substantially parallel to each other and communicate with each other through a gas passage formed in the cooling stage. Phase differences are provided to oscillating gas pressures in the first and second refrigerant tubes, to cancel vibration of the cooling stage, thus effectively reducing the vibration of the cooling stage caused by the oscillating gas pressure.

Soviet Union patent application SU 1105737 A1disclsoes a gas cryogenic machine having a cylinder divided by a displacer with a built in regenerator into warm and cold cavities. To increase the cold production, the cylinder on the cold side has magnets and the displacer has a ferromagnetic material insert with channels for heat carrier circulation, the insert interacting with the magnets.

Further, US patent application US 2007/186560 discloses a device for transporting heat from a cold reservoir to a warm reservoir, in which at least two cyclic processes are employed for transporting heat thereby absorbing work, of which at least one is a regenerative cyclic process, and at least one is a magnetocaloric cyclic process, wherein the regenerative cyclic process has a working fluid and a heat storage medium, is characterized in that the heat storage medium of the regenerative cyclic process comprises a magnetocaloric material for the magnetocaloric cyclic process, wherein the magnetocaloric material is in a regenerator area with a cold end and a warm end, the working fluid of the regenerative cyclic process additionally serving as a heat transfer fluid for the magnetocaloric cyclic process. This produces a compact device with low apparative expense, wherein the power density and also the efficiency of the device are increased. The device may advantageously be used for cooling a superconducting magnet configuration.

### SUMMARY OF THE INVENTION

This present invention aims to provide an apparatus combining magnetic refrigeration and gas-based regenerative refrigeration. Namely, the present invention realizes efficient combination of magnetic refrigeration and gas-based regenerative refrigeration by replacing part of or all of the conventional regenerator fillers in a gas-based regenerative refrigerator with appropriate magnetic refrigeration materials, disposing the magnetic regenerators formed in such way in a magnetic field with controllable and changeable field strength and performing effective coupling between the working sequence of the gas-based regenerative refrigerator and magnetic field changing sequence.

The present invention provides a refrigeration apparatus combining magnetic refrigeration and gas-based regenerative refrigeration, which includes: a pressure wave generator 1, m regenerators, m phase difference adjusting mechanism, j magnet assemblies for generating controllable and changeable field strength and a coupling control system 5 for performing coupling control on working sequence of a gas-based regenerative refrigerator and magnetic field changing sequence,. wherein m is an integer between 2 and 5, and j<=m; part of or all of the m regenerators are magnetic regenerators; and part of or all of fillers in the magnetic regenerators are magnetic refrigeration materials; magnetic refrigeration temperature ranges of the magnetic refrigeration materials in the magnetic regenerators are the same as the corresponding temperature ranges of locations of the magnetic regenerators in the gas-based regenerative refrigerator;
The above components are connected in the following manner: the pressure wave generator 1 is connected via a fluid flow pipe with one end of a first stage gas-based regenerative refrigerator consisting of a first stage regenerator 2₁ and a first stage phase difference adjusting mechanism 3₁ for adjusting phase difference between pressure wave and mass flow rate; and the other end of the first stage gas-based regenerative refrigerator is connected with one end of a lower stage gas-based regenerative refrigerator via a fluid flow pipe, and so on until the last stage; the magnetic regenerators are respectively disposed in the corresponding magnet assemblies for generating controllable and periodically-changing field strength; and the coupling control system 5 for performing coupling control on working sequence of the gas-based regenerative refrigerator and magnetic field changing sequence is respectively connected with the pressure wave generator, phase difference adjusting mechanism and magnet assemblies for generating controllable and changeable field strength via a signal transmission cable and/or pipe and/or mechanical device;
input signals of the coupling control system 5 are characteristic parameters of the working sequence of the pressure wave generator 1 and/or characteristic parameters of the working sequence of respective phase difference adjusting mechanisms; and output signals of the coupling control system 5 are signals for controlling the magnet assemblies for generating controllable and changeable field strength.

The gas-based regenerative refrigerator is a Stirling refrigerator, Vuilleumier (VM) refrigerator, Gifford-McMahon (G-M) refrigerator, Solvay (SV) refrigerator, pulse tube refrigerator or thermoacoustic refrigerator.

The magnet assemblies generate controllable and changeable field strength based on superimposition of magnetic vectors through relative movement of two permanent magnets.

The refrigeration apparatus is a combined composite refrigeration system of magnetic refrigeration and gas-based regenerative refrigeration, which is formed by combining i identical refrigeration apparatuses combining magnetic refrigeration and gas-based regenerative refrigeration according to working sequence phase angle differences θ; wherein the working sequence phase angle differences θ are identical and equal to 360°/i or different from each other.

Through analysis, it can be obtained that, if a high intensity magnetic field of low energy consumption can be obtained, efficient combination of magnetic refrigeration and gas-based regenerative refrigeration can be completely realized in theory by replacing conventional regenerator fillers in a gas-based regenerative refrigerator with appropriate magnetic refrigeration materials, disposing the magnetic regenerators formed in such way in a magnetic field with controllable and changeable field strength and performing effective coupling between working sequence of the gas-based regenerative refrigerator and magnetic field changing sequence. From the perspective of thermodynamics, the above combination can completely blend the magnetic refrigeration and gas-based regenerative refrigeration in the whole cycle by the magnetic regenerators, and it is difficult to distinguish the magnetic refrigeration process from the gas-based regenerative refrigeration process. This combination not only can solve the problem of low efficiency of the pure magnetic refrigerator (the intrinsic efficiency of the combination is higher than that of the two independent refrigeration methods), but also can solve the problem of requiring a complicated heat transfer fluid driving mechanism in the pure magnetic refrigerator by sharing the working fluid between the gas-based regenerative refrigeration and magnetic refrigeration. In addition, due to the progresses on permanent magnet technology providing changeable magnetic fields, the high intensity magnetic field of low energy consumption which can be conveniently and periodically changed is no longer a technical bottleneck, which make it more feasible to implement the combination of gas-based regenerative refrigeration and magnetic refrigeration technically.

For a single magnet, to realize the change of magnetic field strength, it is usually required to input energy when the magnetic field strength is increased and release energy when the magnetic field strength is decreased, although this process is reversible, it is difficult to completely store and release the energy of this process technically, however this problem can be solved in the following way: combining multiple identical refrigeration apparatuses combining magnetic refrigeration and gas-based regenerative refrigeration according to certain working sequence phase angle difference to form a combined composite refrigeration system of magnetic refrigeration and gas-based regenerative refrigeration, in this way, energy storage/release between different magnet assembles for generating controllable and changeable field strength can be realized through working sequence differences of different magnet assembles in energy storage/release processes, thereby further increasing the composite refrigeration efficiency of the refrigeration apparatus of the present invention.

The refrigeration apparatus combining magnetic refrigeration and gas-based regenerative refrigeration of the present invention has the following advantages:
magnetic refrigeration and gas-based regenerative refrigeration are two different refrigeration methods, although both have high intrinsic thermodynamic efficiency, there are corresponding technical problems with both refrigeration methods. Especially, limited by the characteristics of the existing materials and requirement of the complicated heat transfer fluid driving mechanism, the actual efficiency of the magnetic refrigeration is still low and the mechanism is complicated. Through the present invention, the following advantages are obtained:
1. the present invention can solve the problem of low actual efficiency of the pure magnetic refrigerator, thereby improving the refrigeration efficiency significantly;
2. the present invention can solve the problem of requiring a complicated heat transfer fluid driving mechanism in the pure magnetic refrigerator by sharing the working fluid between gas-based regenerative refrigeration and magnetic refrigeration;
3. high intrinsic thermodynamic efficiency can be achieved by replacing the conventional regenerator fillers with magnetic refrigeration materials, the intrinsic efficiency is then higher than that of the pure magnetic refrigeration method and the pure gas-based regenerative refrigeration method without an obvious increase of complexity of the whole system.

### BRIEF DESCRIPTION OF THE DRAWINGS

Fig.1 is a schematic diagram illustrating the structure of an ordinary gas-based regenerative refrigerator;
Fig.2 is a schematic diagram illustrating the structure of a refrigeration apparatus combining magnetic refrigeration and gas-based regenerative refrigeration according to the present invention;
Fig.3 is a schematic diagram illustrating the structure of a permanent magnet assembly for generating controllable and changeable magnetic field strength;
Fig.4 is a schematic diagram illustrating the structure of a refrigeration system combining magnetic refrigeration and 5-stage gas-based Stirling refrigeration;

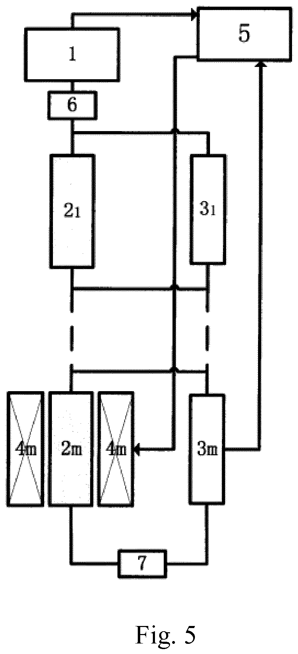

Fig.5 is a schematic diagram illustrating the structure of a refrigeration system combining magnetic refrigeration and 5-stage gas-based Stirling refrigeration;
Fig.6 is a schematic diagram illustrating the structure of a refrigeration system combining magnetic refrigeration and single stage gas-based Stirling refrigeration;
Fig.7 is a schematic diagram illustrating the structure of a refrigeration system combining magnetic refrigeration and 2-stage gas-based GM refrigeration.

### DETAILED DESCRIPTION OF THE EMBODIMENTS

The present invention will be further illustrated in combination with accompanying drawings and embodiments.

Fig. 1 a schematic diagram illustrating the structure of a m-stage gas-based regenerative refrigerator (wherein the regenerator are all ordinary regenerators). The m-stage gas-based regenerative refrigerator includes a pressure wave generator 1, m regenerators and m phase difference adjusting mechanisms; wherein m is an integer between 1 and 5. The above components are connected in the following manner: the pressure wave generator 1 is connected via a fluid flow pipe with one end of a first stage gas-based regenerative refrigerator consisting of a first stage regenerator 2₁ and a first stage phase difference adjusting mechanism 3₁ for adjusting the phase difference between pressure wave and mass flow rate; and the other end of the first stage gas-based regenerative refrigerator is connected with one end of a lower stage gas-based regenerative refrigerator via a fluid flow pipe, and so on until the last stage.

The gas-based regenerative refrigerator may be Stirling refrigerator, VM refrigerator, G-M refrigerator, SV refrigerator, pulse tube refrigerator or thermoacoustic refrigerator.

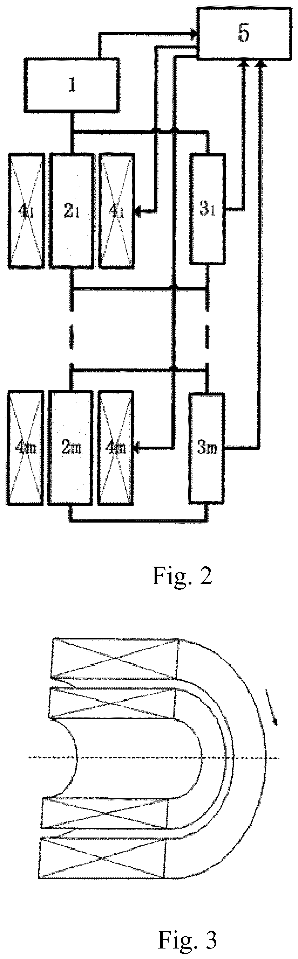

Fig. 2 shows the refrigeration apparatus combining magnetic refrigeration and gas-based regenerative refrigeration, which includes a pressure wave generator 1, m regenerators, m phase difference adjusting mechanisms, j magnet assemblies for generating controllable and changeable field strength and a coupling control system 5 for performing coupling control on the working sequence of a gas-based regenerative refrigerator and magnetic field changing sequence; wherein m is an integer between 2 and 5, j<=m.

Part of or all of m regenerators are magnetic regenerators filled with magnetic refrigeration materials. The magnetic refrigeration temperature ranges of the magnetic refrigeration materials in the magnetic regenerators are the same as the corresponding temperature ranges of locations of the magnetic regenerators in the gas-based regenerative refrigerator.

The magnetic regenerators are respectively disposed in the magnet assemblies for generating controllable and periodically-changing field strength, and the magnet assemblies generate controllable and changeable field strength based on the superimposition of magnetic vectors through relative movement of two permanent magnets. The input signals of the coupling control system 5 are characteristic parameters of the working sequence of the pressure wave generator 1 and/or characteristic parameters of the working sequence of part/all of the phase difference adjusting mechanisms 3, and the output signals of the coupling control system 5 are signals for controlling the change of magnetic field of the magnet assemblies for generating controllable and changeable field strength.

### Embodiment 1: a refrigeration system combining magnetic refrigeration and 5-stage gas-based Stirling refrigeration with a refrigeration temperature of 5K and an ambient temperature of 300K

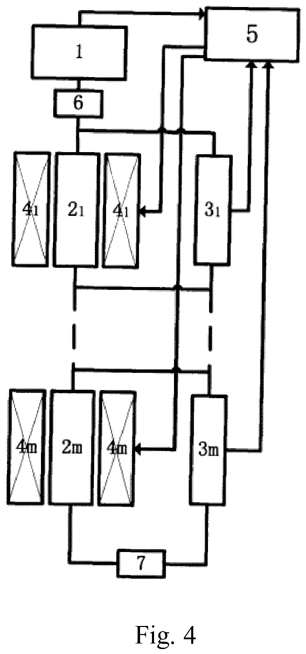

For each regenerator, 10 magnetic refrigeration materials with Curie temperatures or equivalent Curie temperatures ranging from 300K to 5K (the interval between respective Curie temperatures or equivalent Curie temperatures is about 6K) are selected, and the permanent magnet assembly 4 for generating controllable and changeable magnetic field strength is a permanent magnet assembly for generating periodically-changing magnetic field strength, which consists of two permanent magnets arranged co-axially and rotating relatively (as shown in Fig. 3). The system combining magnetic refrigeration and gas-based regenerative refrigeration, as shown in Fig. 4, includes a pressure wave generator (compression chamber) 1, five magnetic regenerators, five phase difference adjusting mechanisms (displacers), five permanent magnet assemblies for generating controllable and changeable field strength, a sequence coupling controller 5, a warm end heat exchanger 6 and a cold end heat exchanger 7. The above components are connected in the following manner: the pressure wave generator 1 is connected via a fluid flow pipe through the warm end heat exchanger 6 with one end of a first stage gas-based regenerative refrigerator consisting of a first stage regenerator 2₁ and a first stage phase difference adjusting mechanism 3₁ for adjusting phase difference between the pressure wave and mass flow rate; and the other end of the first stage gas-based regenerative refrigerator is connected with one end of a lower stage gas-based regenerative refrigerator via a fluid flow pipe, and so on until the last stage, the end of the last stage refrigerator is provided with a cold-end heat exchanger 7 for outputting the cooling capacity; the magnetic regenerators formed by replacing conventional regenerator fillers with the magnetic refrigerant are respectively disposed in corresponding magnet assemblies for generating controllable and periodically-changing field strength; and the coupling controller 5 for performing coupling control on working sequence of gas-based regenerative refrigerator and magnetic field changing sequence is via a signal transmission cable connected with the pressure wave generator 1, phase difference adjusting mechanism 3 and magnet assemblies 4 for generating controllable and changeable field strength.

Each magnetic regenerator is formed by filling 10 magnetic refrigeration materials into the magnetic regenerator in a descending order according to the Curie temperatures or equivalent Curie temperatures of the 10 magnetic materials, and has the same operating temperature range as that of the corresponding regenerator in the gas-based regenerative refrigerator; the input signals of the sequence coupling controller 5 are the movement signals of the compression piston in the pressure wave generator (compression chamber) 1; the output signals of the sequence coupling controller 5 are relative movement signals for controlling the change of magnetic field of the permanent magnet assemblies for generating controllable and changeable field strength; and the flow of the working fluid in the composite refrigeration system is basically the same as that of conventional 5-stage gas-based Stirling refrigeration. This embodiment realizes the combination of magnetic refrigeration and 5-stage gas-based regenerative refrigeration by introducing the magnetic regenerators, permanent magnet assemblies for generating controllable and changeable field strength and the sequence coupling controller 5; the composite refrigeration system formed in such way can at least double the refrigeration capacity at 5K with nearly no increase on energy consumption.

### Embodiment 2: a refrigeration system combining magnetic refrigeration and 5-stage gas-based Stirling refrigeration with a refrigeration temperature of 5K and an ambient temperature of 300K

6 magnetic refrigeration materials with Curie temperatures or equivalent Curie temperatures ranging from about 30K to about 5K (the interval between respective Curie temperatures or equivalent Curie temperatures is about 5K) are selected, and the magnet assembly 4 for generating controllable and changeable field strength is a permanent magnet assembly for generating periodically-changing field strength, which consists of two permanent magnets arranged co-axially and rotating relatively, as shown in Fig.3. The system combining magnetic refrigeration and 5-stage gas-based Stirling refrigeration includes a pressure wave generator (compression chamber) 1, four conventional regenerators and one magnetic regenerator 2ₘ, five phase difference adjusting mechanisms (displacers), a permanent magnet assembly for generating controllable and changeable field strength, a sequence coupling controller 5, a warm end heat exchanger 6 and a cold end heat exchanger 7. The above components are connected in the following manner: the pressure wave generator 1 is connected via a fluid flow pipe through the warm end heat exchanger 6 with one end of a first stage gas-based regenerative refrigerator consisting of a first stage conventional regenerator 2₁ and a first stage phase difference adjusting mechanism 3₁ for adjusting phase difference between the pressure wave and mass flow rate; and the other end of the first stage gas-based regenerative refrigerator is connected with one end of a lower stage gas-based regenerative refrigerator via a fluid flow pipe, and so on until the last stage, the end of the last stage gas-based regenerative refrigerator is provided with a cold-end heat exchanger 7 for outputting the cooling capacity; the magnetic regenerator 2ₘ formed by replacing the conventional last stage regenerator fillers with the magnetic refrigerant is disposed in the magnet assembly for generating controllable and periodically-changing field strength; and the coupling control system 5 for performing coupling control on working sequence of gas-based regenerative refrigerator and magnetic field changing sequence is via a signal transmission cable connected with the pressure wave generator 1, the phase difference adjusting mechanism and the magnet assembly for generating controllable and changeable field strength.

The magnetic regenerator 2ₘ is formed by filling 6 magnetic refrigeration materials into the magnetic regenerator in a descending order according to the Curie temperatures or equivalent Curie temperatures of these magnetic refrigeration materials, and has the same operating temperature range as that of the corresponding regenerator in the gas-based regenerative refrigerator; the input signals of the sequence coupling controller 5 are the movement signals of the compression piston in the compression chamber or movement signals of the displacer; and the output signals of the sequence coupling controller 5 are relative movement signals for controlling the change of magnetic field of the permanent magnet assembly; and the flow of the working fluid in the composite refrigeration system is basically the same as that of conventional 5-stage gas-based Stirling refrigeration. This embodiment realizes the combination of 1-stage magnetic refrigeration and 5-stage gas-based regenerative refrigeration by introducing a magnetic regenerators 2ₘ in the last stage, the permanent magnet assembly for generating controllable and changeable field strength and the sequence coupling controller 5; the composite refrigeration system formed in such way can at least generate double refrigeration capacity at 5K with nearly no increase on energy consumption.

### Embodiment 3: a refrigeration system combining magnetic refrigeration and single stage gas-based Stirling refrigeration with a refrigeration temperature of 5°C and an ambient temperature of 30°C.

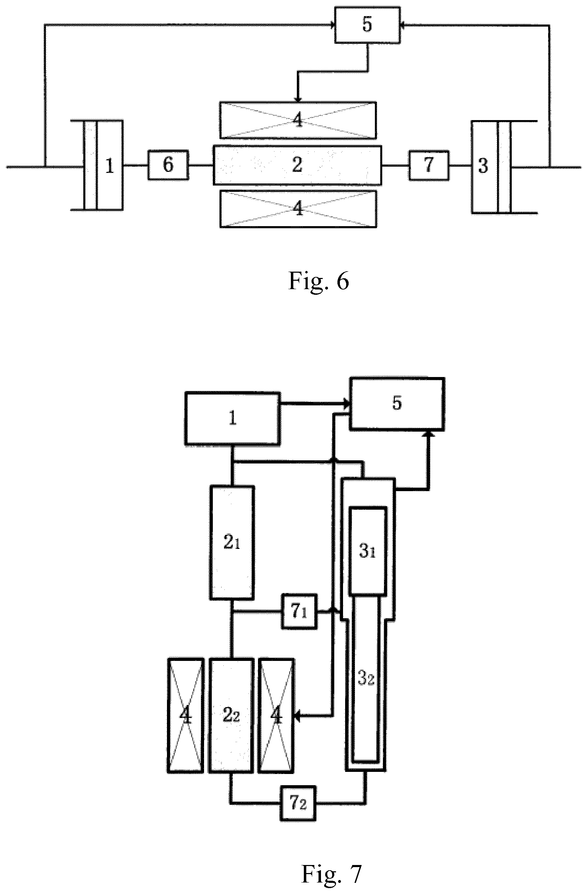

The single material of LaFeSiH based system is used as the magnetic refrigeration material, and the magnet assembly is a permanent magnet assembly for generating periodically-changing field strength, which consists of two permanent magnets arranged co-axially and rotating relatively, as shown in Fig.3. The system combining magnetic refrigeration and single stage gas-based Stirling refrigeration, as shown in Fig. 6, includes a pressure wave generator (compression chamber) 1, a magnetic regenerator 2, a phase difference adjusting mechanism (expansion chamber) 3, a permanent magnet assembly for generating controllable and changeable field strength, a sequence coupling controller 5, a warm end heat exchanger 6 and a cold end heat exchanger 7. The above components are connected in the following manner: the pressure wave generator 1 is connected via a fluid flow pipe through the warm end heat exchanger 6 with one end of a magnetic regenerator 2; and the other end of the magnetic regenerator 2 is connected via a fluid flow pipe through the cold-end heat exchanger 7 with the phase difference adjusting mechanism 3, wherein the magnetic regenerator 2 and the phase difference adjusting mechanism 3 constitute a refrigerator; the magnetic regenerator 2 is disposed in the magnet assembly 4 for generating controllable and periodically-changing field strength; and the coupling control system 5 for performing coupling control on the working sequence of the gas-based regenerative refrigerator and magnetic field changing sequence is through a mechanical device connected with the pressure wave generator 1, the phase difference adjusting mechanism 3 and the magnet assembly 4 for generating controllable and changeable field strength.

The percentage of H in the LaFeSiH is changed to obtain 20 magnetic refrigeration materials with different Curie temperatures. The magnetic regenerator 2 is formed by filling these magnetic refrigeration materials in a descending order according to the Curie temperatures of these magnetic materials, and the operating temperature range of the magnetic regenerator is the same as that of the corresponding regenerator in the gas-based regenerative refrigerator; the input signals of the sequence coupling controller 5 are the movement signals of the pistons in the compression chamber and expansion chamber; the output signals of the sequence coupling controller 5 are relative movement signals for controlling change of magnetic field of the magnet assembly, wherein the input and output are coupled respectively by a simple mechanical device; and the flow of the working fluid in the composite refrigeration system is basically the same as that of the conventional single stage gas-based Stirling refrigeration. This embodiment realizes the combination of magnetic refrigeration and gas-based regenerative refrigeration by introducing the magnetic regenerator, permanent magnet assembly for generating controllable and changeable field strength and the sequence coupling controller. The refrigeration efficiency at 5°C of the refrigeration system in this embodiment could be at least 20% higher than that of the conventional single stage gas-based Stirling refrigeration.

### Embodiment 4: a refrigeration system combining magnetic refrigeration and 2-stage gas-based G-M refrigerator with a refrigeration temperature of 4.2K and an ambient temperature of 300K

8 different magnetic refrigeration materials with Curie temperatures or equivalent Curie temperatures ranging from 40K to 3K (the interval between respective Curie temperatures or equivalent Curie temperatures is about 5K), and the magnet assembly is a permanent magnet assembly for generating periodically-changing field strength, which consists of two permanent magnets arranged co-axially and rotating relatively, as shown in Fig.3. The system combining magnetic refrigeration and 2-stage gas-based G-M refrigeration includes a pressure wave generator 1 (consisting of a compressor unit, a heat rejector and a gas distributing valve unit), a conventional regenerator 2₁ and a magnetic regenerator 2₂, a phase difference adjusting mechanism (i.e. displacer), a permanent magnet assembly 4 for generating controllable and changeable field strength, a sequence coupling controller 5, a first-stage cold end heat exchanger 7₁ and a second-stage cold end heat exchanger 7₂. The above components are connected in the following manner: the pressure wave generator 1 is connected via a fluid flow pipe with one end of a first stage gas-based regenerative refrigerator consisting of the conventional regenerator 2₁ and a first stage phase difference adjusting mechanism 3₁ for adjusting phase difference between the pressure wave and mass flow rate; and the other end of the first stage gas-based regenerative refrigerator (its connecting pipe is provided with the first-stage cold end heat exchanger 7₁) is connected via a fluid flow pipe with one end of a second stage refrigerator consisting of the magnetic regenerator 2₂ and a second stage phase difference adjusting mechanism 3₂ for adjusting phase difference between the pressure wave and mass flow rate; the connecting pipe of the other end of the second stage refrigerator is provided with the second-stage cold end heat exchanger 7₂; the magnetic regenerator 2₂ formed by replacing conventional regenerator fillers with the magnetic refrigerant is disposed in the magnet assembly 4 for generating controllable and periodically-changing field strength; and the coupling controller 5 for performing coupling control on the working sequence of the gas-based regenerative refrigerator and magnetic field changing sequence is via a signal transmission cable connected with the pressure wave generator 1, the phase difference adjusting mechanism and magnet assembly 4 for generating controllable and changeable field strength.

The magnetic regenerator 2₂ is formed by filling 8 magnetic refrigeration materials into the magnetic regenerator in a descending order according to the Curie temperatures or equivalent Curie temperatures of these magnetic refrigeration materials, and has the same operating temperature range as that of the corresponding regenerator in the gas-based regenerative refrigerator; the input signals of the sequence coupling controller 5 are the movement signals of the displacer; and the output signals of the sequence coupling controller 5 are relative movement signals for controlling the change of magnetic field of the permanent magnet assembly 4 for generating controllable and changeable field strength; and the flow of the working fluid in the composite refrigeration system is basically the same as that of conventional 2-stage gas-based G-M refrigeration. This embodiment realizes the combination of magnetic refrigeration and gas-based regenerative refrigeration by introducing the magnetic regenerator, permanent magnet assembly for generating controllable and changeable field strength and the sequence coupling controller; and the composite refrigeration system formed in such way can at least generate double refrigeration capacity at 4.2K with nearly no increase on energy consumption.

The above gas-based regenerative refrigerator is described as a system including three components (namely pressure wave generator, regenerator and phase difference adjusting mechanism). Actually, the above gas-based regenerative refrigerator can also be in the following forms:
1. the pressure wave generator may be in a variety of forms, such as 1) a valveless compressor including a cylinder, piston and driving mechanism (such as Stirling type and Stirling-pulse tube type); 2) a compressor and a gas distributing valve(s) (such as G-M type, G-M-pulse tube type and SV type); 3) a thermal compressor (such as VM type and various types of thermoacoustic refrigerators);
2. the regenerator and the phase difference adjusting mechanism may be independent of each other, or combined partially or completely; although the above embodiments lists some magnetic refrigeration materials, it does not constitute any limitation to the available magnetic refrigeration materials of the present invention, the present invention does not limit and it is unnecessary to limit the type and shape of the magnetic refrigeration material of the magnetic regenerator in anyway. In fact, for a specific composite refrigeration system, many materials can be selected as the magnetic refrigeration material. Those skilled in the art will appreciate and admit that different structures and combination forms of the practical refrigerators and the refrigerators of different materials shall be within the scope the appended claims.

## Claims

1. A refrigeration apparatus combining magnetic refrigeration and gas-based regenerative refrigeration comprising a pressure wave generator (1), m regenerators containing filler materials, m phase difference adjusting mechanisms for adjusting phase difference between the pressure wave and mass flow rate, j magnet assemblies for generating controllable and changeable field strength and a coupling control system (5) for performing coupling control on working sequence of a gas-based regenerative refrigerator and magnetic field changing sequence; wherein m is an integer between 2 and 5, and j<=m; wherein j regenerators are magnetic regenerators in which part of or all of fillers are magnetic refrigeration materials; magnetic refrigeration temperature ranges of the magnetic refrigeration materials in the magnetic regenerators are the same as the corresponding temperature ranges of locations of the magnetic regenerators in the gas-based regenerative refrigerator; and the components are connected in the following manner: the pressure wave generator (1) is connected via a fluid flow pipe with one end of a first stage gas-based regenerative refrigerator consisting of a first stage regenerator (2₁) and a first stage phase difference adjusting mechanism (3₁) for adjusting phase difference between pressure wave and mass flow rate; and the other end of the first stage gas-based regenerative refrigerator is connected with one end of a lower stage gas-based regenerative refrigerator via a fluid flow pipe, and so on until the last stage; the magnetic regenerators are respectively disposed in the corresponding magnet assemblies for generating controllable and periodically-changing field strength; and the coupling control system (5) for performing coupling control on working sequence of the gas-based regenerative refrigerator and magnetic field changing sequence is respectively connected with the pressure wave generator (1), phase difference adjusting mechanisms and magnet assemblies for generating controllable and changeable field strength via a signal transmission cable and/or pipe and/or mechanical device;
input signals of the coupling control system (5) are characteristic parameters of the working sequence of the pressure wave generator (1) and/or characteristic parameters of the working sequence of respective phase difference adjusting mechanisms; and output signals of the coupling control system (5) are signals for controlling the magnet assemblies for generating controllable and changeable field strength.

2. The refrigeration apparatus according to claim 1, wherein the gas-based regenerative refrigerator is a Stirling refrigerator, Vuilleumier (VM) refrigerator, Gifford-McMahon (G-M) refrigerator, Solvay (SV) refrigerator, pulse tube refrigerator or thermoacoustic refrigerator.

3. The refrigeration apparatus according to claim 1, wherein the magnet assemblies generate controllable and changeable field strength based on superimposition of magnetic vectors through relative movement of two permanent magnets.

4. The refrigeration apparatus according to claim 1, wherein the refrigeration apparatus is a combined composite refrigeration system of magnetic refrigeration and gas-based regenerative refrigeration, which is formed by combining i identical refrigeration apparatuses combining magnetic refrigeration and gas-based regenerative refrigeration according to working sequence phase angle differences θ; wherein the working sequence phase angle differences θ are identical and equal to 360°/i or different from each other.

## Patentansprüche

1. Eine Kältevorrichtung, die magnetische Kühlung und gasbasierte regenerative Kühlung kombiniert, aufweisend einen Druckwellengenerator (1), m Regeneratoren, die Füllstoffe enthalten, m Phasendifferenz-Einstellmechanismen zum Einstellen der Phasendifferenz zwischen der Druckwelle und dem Massendurchsatz, j Magnetanordnungen zum Erzeugen von steuerbaren und veränderbaren Feldstärken und ein Kopplungssteuerungssystem (5) zum Durchführen einer Kopplungssteuerung eines Arbeitsablaufs eines gasbasierten regenerativen Kühlschranks und einer Magnetfeldänderungssequenz; wobei m eine ganze Zahl zwischen 2 und 5 ist, und j<=m; wobei j Regeneratoren magnetische Regeneratoren sind, in denen ein Teil oder alle Füllstoffe magnetische Kältematerialien sind; wobei magnetische Kältetemperaturbereiche der magnetischen Kältematerialien in den magnetischen Regeneratoren die gleichen sind wie die entsprechenden Temperaturbereiche der Standorte der magnetischen Regeneratoren in dem gasbasierten regenerativen Kühlschrank; und wobei die Komponenten auf folgende Weise verbunden sind: der Druckwellengenerator (1) ist über ein Fluidströmungsrohr mit einem Ende eines gasbasierten regenerativen Kühlschranks der ersten Stufe verbunden, bestehend aus einem Regenerator der ersten Stufe (2₁) und einem Phasendifferenz-Einstellmechanismus der ersten Stufe (3₁) zum Einstellen der Phasendifferenz zwischen Druckwelle und Massenstrom, und das andere Ende des gasbasierten regenerativen Kühlschranks ist über ein Fluidströmungsrohr mit einem Ende einer unteren Stufe eines gasbasierten regenerativen Kühlschranks verbunden und so weiter bis zur letzten Stufe; die magnetischen Regeneratoren sind jeweils in den entsprechenden Magnetanordnungen zum Erzeugen einer steuerbaren und periodisch wechselnden Feldstärke angeordnet; und das Kopplungssteuerungssystem (5) zum Durchführen einer Kopplungssteuerung des Arbeitsablaufs des gasbasierten regenerativen Kühlschranks und einer Magnetfeldänderungssequenz ist entsprechend mit dem Druckwellengenerator (1), den Phasendifferenz-Einstellmechanismen und den Magnetanordnungen zum Erzeugen einer steuerbaren und veränderlichen Feldstärke über ein Signalübertragungskabel und/oder Rohr und/oder eine mechanische Vorrichtung verbunden;
Eingangssignale des Kopplungssteuerungssystems (5) charakteristische Parameter der Arbeitsfolge des Druckwellengenerators (1) und/oder charakteristische Parameter der Arbeitsfolge der jeweiligen Phasendifferenz-Einstellmechanismen sind; und Ausgangssignale des Kopplungssteuerungssystems (5) Signale zum Steuern der Magnetanordnungen zum Erzeugen von steuerbaren und veränderbaren Feldstärken sind.

2. Kühlvorrichtung nach Anspruch 1, wobei der gasbasierte regenerative Kühlschrank ein Stirling-Kühlschrank, Vuilleumier (VM)-Kühlschrank, Gifford-McMahon (G-M)-Kühlschrank, Solvay (SV)-Kühlschrank, Pulsröhrenkühler oder thermoakustischer Kühlschrank ist.

3. Kühlvorrichtung nach Anspruch 1, wobei die Magnetanordnungen steuerbare und veränderbare Feldstärke basierend auf der Überlagerung von magnetischen Vektoren durch Relativbewegung von zwei Permanentmagneten erzeugen.

4. Kühlvorrichtung nach Anspruch 1, wobei die Kühlvorrichtung ein kombiniertes Verbundkühlsystem aus magnetischer Kühlung und gasbasierter regenerativer Kühlung ist, das durch Kombinieren von i identischen Kühlvorrichtungen gebildet ist, die magnetische Kühlung und gasbasierte regenerative Kühlung gemäß den Phasenwinkeldifferenzen der Arbeitsfolge θ kombinieren; wobei die Phasenwinkeldifferenzen der Arbeitsfolge θ identisch und gleich 360°/i oder unterschiedlich voneinander sind.

## Revendications

1. Appareil de réfrigération combinant la réfrigération magnétique et la réfrigération régénérative à base de gaz comprenant un générateur d'ondes de pression (1), m régénérateurs contenant des matériaux de remplissage,
m mécanismes de réglage de différence de phase pour régler la différence de phase entre l'onde de pression et le débit massique,
j ensembles d'aimants pour générer une intensité de champ contrôlable et variable et un système de commande de couplage (5) pour effectuer une commande de couplage sur la séquence de travail d'un réfrigérateur régénératif à base de gaz et d'une séquence de changement de champ magnétique; dans lequel m est un entier entre 2 et 5, et j<=m; dans lequel j régénérateurs sont des régénérateurs magnétiques dans lesquels une partie ou la totalité des charges sont des matériaux magnétiques réfrigérants; les gammes de températures de refroidissement magnétique des matériaux magnétiques réfrigérants dans les régénérateurs magnétiques sont identiques aux plages correspondantes des températures des positions des régénérateurs magnétiques dans les réfrigérateurs à base de gaz; et les composants sont raccordés de la manière suivante: et le générateur d'ondes de pression (1) est relié par l'intermédiaire d'une conduite d'écoulement de fluide avec une extrémité d'un réfrigérateur régénératif de premier étage à base de gaz comprenant un régénérateur de premier étage (2i) et un mécanisme de réglage de différence de phase de premier étage (3i) pour régler la différence de phase entre l'onde de pression et le débit de masse; l'autre extrémité du réfrigérateur régénératif de premier étage à base de gaz est reliée avec une extrémité d'un réfrigérateur de régénération à basse température par l'intermédiaire d'un fluide, etc. jusqu'au dernier étage; les régénérateurs magnétiques sont respectivement disposés dans les ensembles d'aimants correspondants pour générer une intensité de champ contrôlable et changeant périodiquement; et le système de commande de couplage (5) pour effectuer une commande de couplage sur la séquence de travail du réfrigérateur régénératif à base de gaz et la séquence de changement de champ magnétique est respectivement connecté au générateur d'ondes de pression (1), les mécanismes de réglage de différence de phase
et des ensembles d'aimants pour générer une intensité de champ contrôlable et variable par l'intermédiaire d'un câble et/ou d'une conduite de transmission de signaux et/ou d'un dispositif mécanique;
les signaux d'entrée du système de commande de couplage (5) sont des paramètres caractéristiques de la séquence de fonctionnement du générateur d'ondes de pression (1) et/ou des paramètres caractéristiques de la séquence de fonctionnement des mécanismes respectifs de réglage de différence de phase; et les signaux de sortie du système de commande de couplage (5) sont des signaux pour commander les ensembles magnétiques pour générer un champ réglable et variable.

2. Appareil de réfrigération selon la revendication 1, dans lequel le réfrigérateur régénératif à base de gaz est un réfrigérateur Stirling, un réfrigérateur Vuilleumier (VM), un réfrigérateur Gifford-McMahon (G-M), un réfrigérateur Solvay (SV), un réfrigérateur à tube pulsé ou un réfrigérateur thermo-acoustique.

3. Appareil de réfrigération selon la revendication 1, dans lequel les ensembles d'aimants génèrent une intensité de champ contrôlable et variable fondée sur la superposition de vecteurs magnétiques par un mouvement relatif de deux aimants permanents.

4. Appareil de réfrigération selon la revendication 1, dans lequel l'appareil de réfrigération est un système de réfrigération composite combiné de réfrigération magnétique et la réfrigération régénérative à base de gaz, qui se forme en combinant i appareils de réfrigération identiques combinant la réfrigération magnétique et la réfrigération à base de gaz en fonction des différences d'angle de phase θ de la séquence de travail;
dans laquelle les différences d'angle de phase θ de séquence de travail sont identiques et égales à 360°/i ou différentes les unes des autres.
